# EUROPÄISCHE PATENTSCHRIFT

(11) **EP 2 834 128 B1**
(45) Veröffentlichungstag und Bekanntmachung des Hinweises auf die Patenterteilung: **02.08.2017**
(21) Anmeldenummer: 12714993.8
(22) Anmeldetag: 02.04.2012
(51) Int. Cl.: B62B 9/18

(54) **STREBE MIT STOSSDÄMPFERFUNKTION FÜR EINEN KINDERWAGEN**
STRUT WITH SHOCK ABSORBER FUNCTION FOR A STROLLER
ENTRETOISE À FONCTION AMORTISSEUR DE CHOCS POUR UN LANDAU

(43) Veröffentlichungstag der Anmeldung: 11.02.2015
(73) Patentinhaber: ABC Design GmbH, 79774 Albbruck (DE)
(72) Erfinder: FISCHER, Bernd, 79774 Albbruck (DE)
(74) Vertreter: dompatent von Kreisler Selting Werner - Partnerschaft von Patent- und Rechtsanwälten mbB
(86) Internationale Anmeldenummer: PCT/EP2012/055958
(87) Internationale Veröffentlichungsnummer: WO 2013/149640

(56) Entgegenhaltungen:
- FR-A- 572 921
- GB-A- 221 979
- GB-A- 222 262
- GB-A- 245 565
- US-A1- 2003 230 871

## Beschreibung

Die Erfindung betrifft eine Strebe mit Stoßdämpferfunktion für einen Kindewagen, bei der es sich beispielsweise um ein Federbein für einen Kinderwagen handelt.

Aus Komfortgründen ist es zweckmäßig, Kinderwagengestelle federnd auszubilden. Hierzu eignen sich beispielsweise Streben mit Stoßdämpferfunktion, wie sie beispielsweise allgemein als Stoßdämpfer bei Fahrzeugen bekannt sind. Man spricht mitunter auch von Federbeinen.

Kinderwagengestellestreben mit stoßdämpferfunktion nach dem Oberbegriff des Anspruchs 1 sind aus US-A- 2003/0230871 A1 und GB-A- 245 565 bekannt. Weitere bekannte Streben mit Stoßdämpferfunktion für Kinderwagengestelle sind in FR-A-572 921, GB-A-221 979 und GB-A-272 262 bekannt.

Aufgabe der Erfindung ist es, ein einfach gestaltetes Federbein bzw. eine Strebe mit Stoßdämpferfunktion für einen Kinderwagen anzugeben.

Zur Lösung dieser Aufgabe wird mit der Erfindung eine Strebe mit Stoßdämpferfunktion für einen Kinderwagen vorgeschlagen, wobei die Strebe versehen ist mit den Merkmalen des Anspruchs 1. Einzelne Ausgestaltungen der Erfindung sind Gegenstand der Unteransprüche.
en

Die erfindungsgemäß vorgeschlagene Strebe besteht aus zwei Strebenteilen bzw. Strebenelementen. Jedes dieser Strebenelemente weist eine Führungshülse auf. Die beiden Führungshülsen sind ineinandergesteckt. Zwischen den beiden Strebenelementen befindet sich eine Druckfeder, die sich an den beiden Strebenelementen abstützt. Hierzu weisen die beiden Strebenelemente jeweils einen Federanlagesitz auf, der beispielsweise als Flansch, Schulterfläche oder Vorsprung ausgebildet sein kann.

Erfindungsgemäß ist einer der beiden Federanlagesitze an einem Federvorspannkraft-Einstellelement ausgebildet, dass an einem der beiden Strebenelemente angeordnet ist. Das Einstellelement ist axial verschiebbar und in mindestens zwei unterschiedlichen Axialverschiebepositionen arretierbar an dem betreffenden Strebenelement angeordnet. Hierdurch wird auf einfache Art und Weise erreicht, dass die Federkraft der Strebe einstellbar ist. Die Federvorspannkrafteinstellung lässt sich insbesondere deshalb recht einfach und damit komfortabel vornehmen, als das Einstellelement von außen manuell zugänglich ist. Wenn beispielsweise die erfindungsgemäße Strebe einfach oder mehrfach bei einem Kinderwagen verbaut ist, so lässt sich die "Härte" der Stoßdämpferfunktion bequem einstellen, und zwar beispielsweise in Abhängigkeit von dem in Laufe der Zeit größer werdenden Gewicht des im Kinderwagen transportierten Kindes.

Nach der Erfindung ist ferner vorgesehen, dass das Federvorspannkraft-Einstellelement nach Art einer Einstellhülse ausgebildet ist, die zumindest teilweise freiliegend an dem betreffenden Strebenelement angeordnet ist. Diese Einstellhülse ist zweckmäßigerweise über einen Gewindeeingriff mit einem zylindrischen Abschnitt des Strebenelements verbunden. Somit lässt sich die Einstellhülse relativ zum Strebenelement verdrehen und dadurch axial verschieben. Wenn das Gewinde selbsthemmend ausgebildet ist, verbleibt die Einstellhülse in ihrer jeweiligen Axialverschiebeposition bzw. Verdrehposition.

Schließlich ist nach der Erfindung alternativ auch vorgesehen, dass das Strebenelement zwei insbesondere diametral angeordnete, nach außen abstehende Zapfen aufweist und dass an der Einstellhülse an deren dem Federanlagesitz abgewandten Ende eine sich in Umfangsrichtung der Einstellhülse erstreckende Kulisse mit ansteigenden ersten Abschnitten und mit zwischen diesen angeordneten, im Wesentlichen auf gleicher Höhe verlaufenden oder abfallenden zweiten Abschnitten ausgebildet ist, entlang derer die Zapfen bei einer relativ zum Strebenelement erfolgenden Verdrehung der Einstellhülse entlanggleiten. Wird die Einstellhülse verdreht, so gleitet jeder Zapfen entlang der an der Einstellhülse ausgebildeten Kulisse. Durch die ansteigenden ersten Abschnitte erfährt die Einstellhülse bei ihrer Verdrehung eine axiale Verschiebung; befindet sich ein Zapfen in einem der zweiten Abschnitte der Kulisse, so nimmt die Einstellhülse eine Rastposition ein, die ein unbeabsichtigtes Verdrehen der Einstellhülse gegenüber dem Strebenelement verhindert. Die zweiten Abschnitte können zweckmäßigerweise entweder mit Rastmulden oder leicht abfallend ausgebildet sein.

Wie bereits oben erwähnt, kann die erfindungsgemäße Strebe als Federbein bei einem Kinderwagen eingesetzt werden. Ein derartiges Federbein kann je nach Konstruktion des Kinderwagengestells nahe einem Rad des Kinderwagens enden. Moderne Kinderwagen sind mit manuell betätigbaren Bremsen versehen, die einen Handgriff beispielsweise am Schieber des Kinderwagens und eine Bremse an einem oder mehreren der Räder umfassen. Zwischen dem Handbremsengriff und der Bremse erstreckt sich dabei im Regelfall ein Bowdenzug. Vorteilhafterweise erstreckt sich dieser Bowdenzug durch das Federbein hindurch, was bedeutet, dass jedes Strebenelement einen axialen Durchführungskanal aufweist. Dieser Durchführungskanal mündet in die betreffende Führungshülse ein. Da beide Führungshülsen ineinander gesteckt sind, ergibt sich damit ein Gesamtdurchführungskanal durch die Strebe hindurch, durch die der Bowdenzug o.dgl. Kopplungselemente hindurchgeführt werden kann.

Die Druckfeder der erfindungsgemäßen Strebe kann entweder außen abgedeckt oder aber außen freiliegend angeordnet sein. Sie ist beispielsweise konzentrisch zu den Führungshülsen und insbesondere außerhalb derselben angeordnet. Bei dieser letztgenannten Variante weisen die Federanlagesitze jeweils eine außenliegende Anlagefläche auf.

Die Erfindung wird nachfolgend anhand eines Ausführungsbeispiels sowie unter Bezugnahme auf die Zeichnung näher erläutert. Im Einzelnen zeigen dabei:
- Fig. 1: ein beispielhaftes Kinderwagengestell mit zwei hinteren Federbeinen,
- Fig. 2: eine vergrößerte Detailansicht eines Federbeins des Kinderwagengestells gemäß Fig. 1 und
- Fig. 3: eine Seitenansicht der das Federbein bildenden Strebe mit Stoßdämpferfunktion, wobei Teilbereiche aufgebrochen dargestellt sind.

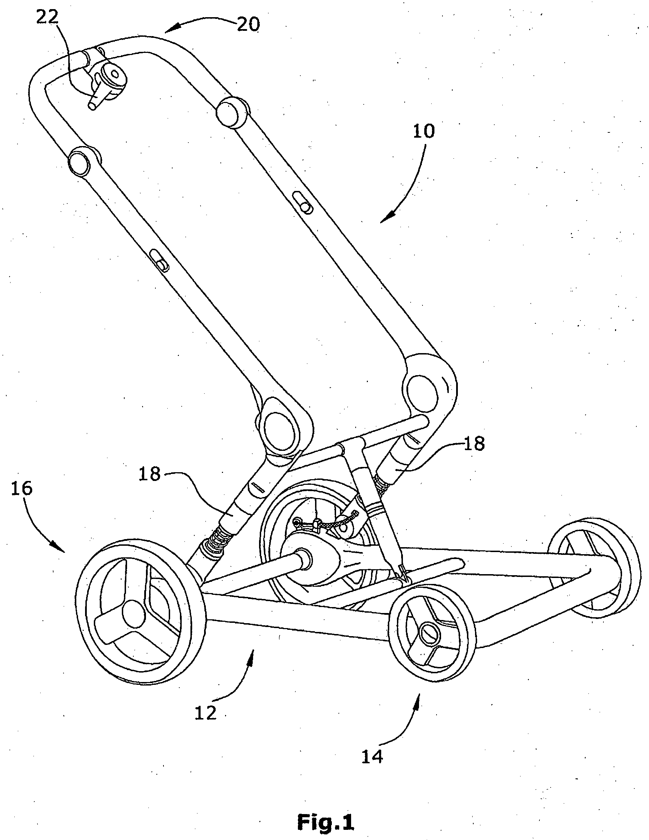

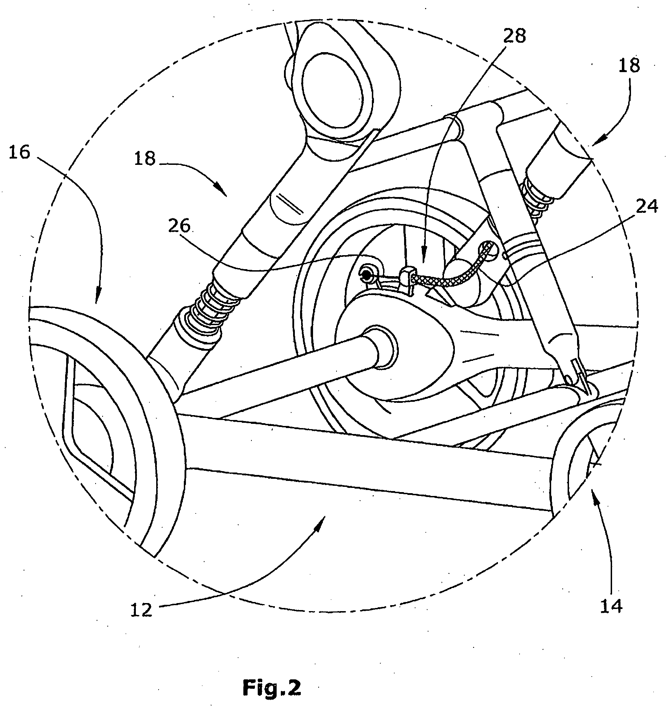

In den Fign. 1 und 2 sind eine perspektivische Ansicht sowie eine Detailansicht eines Kinderwagengestells 10 gezeigt. Das Gestell 10 umfasst einen unteren Gestellteil 12 mit vorderen und hinteren Rädern 14,16 sowie mit zwei hinteren Federbeinen 18. Im oberen Bereich weist das Kinderwagengestell 10 einen Schieber 20 mit einem Handbremsengriff 22 auf. Über den Handbremsengriff 22 lassen sich zwei beispielsweise Trommelbremsen (im Einzelnen nicht dargestellt) an den hinteren Rädern 16 betätigen. Hierzu weist das Kinderwagengestell 10 einen sich durch die Gestellrohre und Gelenke erstreckenden Bowdenzüge auf, die von dem Handbremsengriff 22 bis zu jeder Trommelbremse führen. In Fig. 2 ist die Führungshülse 24 und die Seele 26 eines der beiden Bowdenzüge 28 zu erkennen.

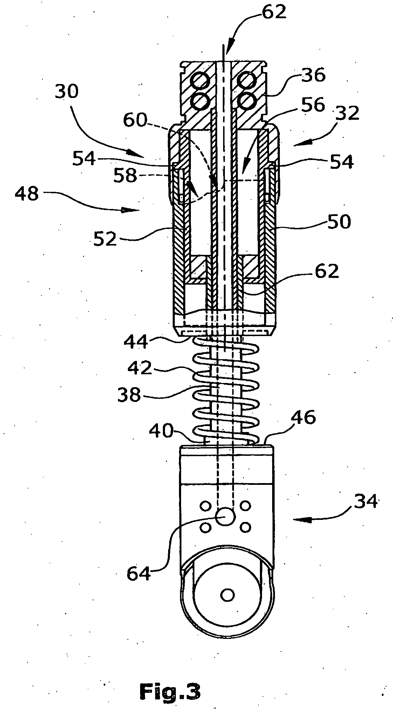

Fig. 3 zeigt in Seitenansicht eine Strebe 30, wie sie als Federbein 18 verbaut ist. Die Strebe 30 weist ein bezogen auf die Darstellung in Fig. 3 erstes oberes Strebenelement 32 und ein zweites unteres Strebenelement 34 auf. Beide Strebenelemente sind mit Steckstutzen 36 versehen, an die die angrenzenden Teile des Kinderwagengestells 10 angesteckt werden können.

Jedes Strebenelement 32,34 ist darüber hinaus mit einer Führungshülse 38,40 versehen, die axial ineinandergeschoben sind. Dadurch sind beide Strebenelemente 32,34 axial aneinander geführt.

Im Bereich der freiliegenden Führungshülsen 38,40 und um diese herum befindet sich eine Schraubendruckfeder 42, deren Vorspannkraft einstellbar ist. Die Schraubendruckfeder 42 stützt sich an gegenüberliegenden Federanlagesitzen 44,46 der beiden Strebenelemente 32,34 ab. Zur Einstellung der Vorspannkraft der Feder 42 ist der dem ersten Strebenelement 32 zugeordnete. Federanlagesitz 44 an einem Einstellelement 48 ausgebildet. Bei diesem Einstellelement 48 handelt es sich in diesem Ausführungsbeispiel um eine Einstellhülse 50, die einen zylindrischen Abschnitt 52 des ersten Strebenelements 32 umgibt. Von dem zylindrischen Abschnitt 52 des ersten Strebenelements 32, der mit der Führungshülse 38 fest verbunden ist, erstrecken sich diametral gegenüberliegende Zapfen 54, die auf einer Kulisse 56 der Einstellhülse 50 entlanggleiten, wenn diese gedreht wird. Dies ist in der Fig. 3 gestrichelt gezeigt. Die Kulisse 56 weist ansteigende erste Abschnitte 58 mit zwischen diesen angeordneten zweiten Rastabschnitten 60 auf. Insgesamt existieren in diesem Ausführungsbeispiel zwei mittlere Rastabschnitte 60. Unter Berücksichtigung, dass an den gegenüberliegenden Enden der Kulisse 56 ebenfalls Rastpositionen existieren, ist die Einstellhülse 50 also in vier Verdrehstellungen gegen unbeabsichtigte Weiterverdrehungen gesichert. In diesen vier Stellungen ist die Einstellhülse 50 jeweils unterschiedlich weit ausgefahren, was bedeutet, dass die Schraubendruckfeder 42 unterschiedlich stark vorgespannt ist.

Wie bereits oben erwähnt, verlaufen die Bowdenzüge 28 ausgehend von der Handbremse 22 durch die Gestellrohre, aus denen das Kinderwagengestell 10 zusammengesetzt ist. Auch verlaufen diese Bowdenzüge 28 durch die Gelenke, was im Einzelnen nicht dargestellt ist. Schließlich erstrecken sich die Bowdenzüge 28 auch durch die beiden Federbeine 18. Hierzu weist jede Strebe 30 einen Durchführungskanal 62 auf, der sich durch die Steckstutzen 36 und weiter durch die Führungshülsen 38,40 erstreckt. Der Durchführungskanal 62 beginnt im Steckstutzen 36 des oberen Strebenelements 32 und endet außen an der Umfangsfläche des unteren Strebenelements 34 in der Auslassöffnung 64.

Durch diesen Durchführungskanal 62 verläuft dann jeweils einer der Bowdenzüge 28.

## Patentansprüche

1. Strebe mit Stoßdämpferfunktion für einen Kinderwagen, mit
- einem ersten Strebenelement (32), von dem eine erste Führungshülse (38) absteht,
- einem zweiten Strebenelement (34), von dem eine zweite Führungshülse (40) absteht,
- wobei jedes Strebenelement (32,34) einen Federanlagesitz (44,46) aufweist, von dem aus sich die betreffende Führungshülse (38,40) axial erstreckt, und
- wobei die Führungshülsen (38,40) beider Strebenelemente (32,34) axial ineinandergeschoben sind, und
- einer Druckfeder (42), die sich an den gegenüberliegend angeordneten Federanlagesitzen (44,46) der beiden Strebenelemente (32,34) abstützt,
- wobei mindestens einer der beiden Federanlagesitze (44,46) an einem Federvorspannkraft-Einstellelement (48) ausgebildet ist, das an dem Strebenelement axial verschiebbar und in mindestens zwei unterschiedlichen Axialverschiebepositionen arretierbar angeordnet ist, und
- wobei das Federvorspannkraft-Einstellelement (48) nach Art einer Einstellhülse (50) ausgebildet ist, die zum Umgreifen mit der Hand zumindest teilweise freiliegend an dem Strebenelement (32,34) angeordnet ist.
**dadurch gekennzeichnet,**
- **dass** die Einstellhülse (50) mit einem zylindrischen Abschnitt (52) des Strebenelements (32,34) in Gewindeeingriff steht
oder
- **dass** das Strebenelement (32,34) zwei insbesondere diametral angeordnete, nach außen abstehende Zapfen (54) aufweist, und dass an der Einstellhülse (50) an deren dem Federanlagesitz (44,46) abgewandten Ende eine sich in Umfangsrichtung der Einstellhülse (50) erstreckende Kulisse (56) mit ansteigenden ersten Abschnitten (58) und mit zwischen diesen angeordneten, im Wesentlichen auf gleicher Höhe verlaufenden oder abfallenden zweiten Abschnitten (60) ausgebildet ist, entlang derer die Zapfen (54) bei einer relativ zum Strebenelement erfolgenden Verdrehung der Einstellhülse (50) entlanggleiten.

2. Strebe nach Anspruch 1, **dadurch gekennzeichnet, dass** jedes Strebenelement mit einem axialen Durchführungskanal (62) für insbesondere einen Bremsen-Bowdenzug (28) o.dgl. Kopplungselement zwischen einem Betätigungselement und einer Bremsvorrichtung versehen ist.

3. Strebe nach Anspruch 1 oder 2, **dadurch gekennzeichnet, dass** die Druckfeder (42) eine Schraubenfeder ist, die im Wesentlichen konzentrisch zu den Führungshülsen angeordnet ist.

4. Strebe nach Anspruch 3, **dadurch gekennzeichnet, dass** die Federanlagesitze (44,46) jeweils eine außen liegende Anlagefläche aufweisen und dass die Schraubenfeder die Führungshülsen von außen umgibt.

## Claims

1. Strut with shock absorber function for a stroller, comprising
- a first strut element (32) from which a first guide sleeve (38) projects,
- a second strut element (34) from which a second guide sleeve (40) projects,
- wherein each strut element (32, 34) comprises a spring abutment seat (44, 46) from which the respective guide sleeve (38, 40) extends in the axial direction, and
- wherein the guide sleeves (38, 40) of both strut elements (32, 34) are pushed into one another in the axial direction, and
- a compression spring (42) supported at the opposite spring abutment seats (44, 46) of the two strut elements (32, 34),
- wherein at least one of the two spring abutment seats (44, 46) is formed on a spring preload adjustment element (48) arranged to be axially displaceable on the strut element and to be locked in at least two different axial displacement positions, and
- wherein the spring preload adjustment element (48) is designed in the manner of an adjusting sleeve (50) arranged to be at least partially exposed on the strut element (32, 34) for being gripped with a hand,
**characterized in**
- **that** the adjusting sleeve (50) is in threaded engagement with a cylindrical section (52) of the strut element (32, 34),
or
- **that** the strut element (32, 34) has two in particular diametrically arranged, outwardly projecting pins (54), and that the end of the adjusting sleeve (50) averted from the spring abutment seat (44, 46) is formed with a motion link (56) extending in the circumferential direction of the adjusting sleeve (50) and having ascending first sections (58) and second sections (60) arranged between the same and extending substantially on the same level or descending, along which sections the pins (54) slide when the adjusting sleeve (50) is turned relative to the strut element.

2. Strut of claim 1, **characterized in that** each strut element is provided with an axial passage channel (62) for in particular a brake Bowden cable (28) or a similar coupling element between an actuation element and a brake device.

3. Strut of claim 1 or 2, **characterized in that** the compression spring (42) is a coil spring arranged substantially concentrically to the guide sleeves.

4. Strut of claim 3, **characterized in that** the spring abutment seats (44, 46) each have an outer abutment surface and that the coil spring surrounds the guide sleeves on the outside.

## Revendications

1. Entretoise à fonction amortisseur de chocs pour un landau, avec
- un premier élément d'entretoise (32) sur lequel un premier manchon de guidage (38) est en saillie,
- un second élément d'entretoise (34) sur lequel un second manchon de guidage (40) est en saillie,
- chaque élément d'entretoise (32, 34) comprenant un siège d'appui de ressort (44, 46) à partir duquel le manchon de guidage respectif (38, 40) s'étend axialement, et
- les manchons de guidage (38, 40) des deux éléments d'entretoise (32, 34) étant emboîtés axialement l'un dans l'autre, et
- un ressort de compression (42) qui prend appui sur les sièges d'appui de ressort (44, 46), disposés en regard l'un de l'autre, des deux éléments d'entretoise (32, 34),
- au moins un des deux sièges d'appui de ressort (44, 46) étant formé sur un élément d'ajustage de précontrainte de ressort (48) qui est disposé axialement coulissant sur l'élément d'entretoise et apte à pouvoir être arrêté dans au moins deux positions différentes de coulissement axial, et
- l'élément d'ajustage de précontrainte de ressort (48) étant configuré à la façon d'un manchon d'ajustage (50) qui est disposé sur l'élément d'entretoise (32, 34) au moins partiellement à découvert pour pouvoir être entouré d'une main,
**caractérisé en ce que**
- le manchon d'ajustage (50) est en prise par filetage avec un tronçon cylindrique (52) de l'élément d'entretoise (32, 34)
ou
- l'élément d'entretoise (32, 34) comprend deux tenons (54) notamment disposés diamétralement et en saillie vers l'extérieur, et **en ce qu'**il est formé sur le manchon d'ajustage (50), à son extrémité détournée du siège d'appui de ressort (44, 46), une coulisse (56) s'étendant dans la direction circonférentielle du manchon d'ajustage (50) et comportant des premiers tronçons ascendants (58) et des deuxièmes tronçons (60) disposés entre ceux-ci et s'étendant sensiblement au même niveau ou étant descendants, le long desquels les tenons (54) coulissent lors d'une rotation du manchon d'ajustage (50) par rapport à l'élément d'entretoise.

2. Entretoise selon la revendication 1, **caractérisée en ce que** chaque élément d'entretoise est pourvu d'un canal axial de passage (62) pour notamment un câble de frein de type Bowden (28) ou un élément d'accouplement semblable, entre un organe d'actionnement et un dispositif de freinage.

3. Entretoise selon la revendication 1 ou 2, **caractérisée en ce que** le ressort de compression (42) est un ressort hélicoïdal disposé sensiblement de manière concentrique par rapport aux manchons de guidage.

4. Entretoise selon la revendication 3, **caractérisée en ce que** les sièges d'appui de ressort (44, 46) présentent chacun une surface d'appui s'étendant vers l'extérieur et **en ce que** le ressort hélicoïdal entoure les manchons de guidage.
